# EUROPEAN PATENT SPECIFICATION

(11) **EP 0 253 532 B1**
(45) Date of publication and mention of the grant of the patent: **05.10.1994**
(21) Application number: 87305721.0
(22) Date of filing: 26.06.1987
(51) Int. Cl.: B44B 5/00, B29C 59/02

(54) **Method for making embossed identification plate having retroreflective sheeting of the surface thereof**
Verfahren zur Herstellung einer geprägten Identifikationsplatte mit retroreflektiver Bekleidung an ihrer Oberfläche
Procédé pour la fabrication d'une plaque d'identification estampée ayant un revêtement rétroreflectif à sa surface

(30) Priority: 11.07.1986 US 884532
(43) Date of publication of application: 20.01.1988
(73) Proprietor: MINNESOTA MINING AND MANUFACTURING COMPANY, St. Paul, Minnesota 55133-3427 (US)
(72) Inventor: Chirhart, Dennis J., P.O. Box 33427 St.Paul Minnesota 55133 (US); Daniels, Michael P., P.O. Box 33427 St.Paul Minnesota 55133 (US); Kneipp, Kenneth G., P.O. Box 33427 St.Paul Minnesota 55133 (US)
(74) Representative: Baillie, Iain Cameron

(56) References cited:
- EP-A- 0 043 294
- US-A- 4 248 748
- PATENT ABSTRACTS OF JAPAN, vol. 6, no. 1 (M-105)(879), January 7, 1982; JP-A-56 126123

## Description

### Field Of Invention

This invention relates to a method for making embossed identification plates, e.g., license plates, having retroreflective sheeting on the surface thereof.

### Background

Traditionally, the indicia of license plates for motor vehicles have been incorporated into the plate by painting, stamping, embossing or the like. The starting product in the manufacture of license plates is customarily a plate or sheet blank of suitable thickness. This plate or sheet blank is typically made of metal, e.g., aluminum, or, more recently, of a suitable plastic material, e.g., acrylonitrile-butadiene-styrene ("ABS") copolymers, and is usually stamped or molded with a thickened rim or edge portion to provide greater rigidity. The plate manufacturer typically forms the desired indicia or markings by stamping the rear face of the blank so that the indicia appear on the front face thereof in embossed fashion. The indicia, which are raised in relief relative to the background, are then typically colored with a different color than that of the background, such as by applying a colored coating to the raised area, e.g., by rollers.

Many countries use light reflecting, preferably retroreflective, license plates in order to improve recognition and reading of the identifying indicia, i.e., numerals and/or letters, on the plates at nighttime, and to increase traffic safety. When manufacturing such plates, a reflective material or substance is typically applied to the plate blank before the indicia are embossed therein. After embossing, the raised areas which constitute the indicia are covered or coated to provide contrast with the background. At nighttime and upon reflection, the coated indicia appear black whereas the reflective background, by contrast, appears bright and light-colored. The indicia coating is preferably chosen to provide daytime color contrast with the typically light-colored or white background.

It has been proposed that instead of coating raised areas with a colored coating material, that reflective material, such as retroreflective sheeting, be selectively applied only in the background areas of the plate around the raised indicia, with the indicia being provided by the exposed raised plate material. While such a technique avoids the previous practice of coating the raised areas of the plate with a special durable colored coating material, it has several difficulties. For example, selective application requires accurate trimming or prepunching of the reflective sheeting to conform to the indicia, and accurate placement of the trimmed reflective sheeting in alignment with the indicia. Since the sheeting typically comprises a pressure-sensitive adhesive and is difficult to move after contacting the plate, accurate initial placement is demanded.

A prior art that is of interest is European Patent Application Publication No., 0 043 294 (Pretorius) disclosing the embossing of metal licence plates to form desired indicia thereon and simultaneously effecting the cutting of a reflective layer according to the indicia.

A further prior art is disclosed in Patent Abstracts of Japan, vol. 6, no. 1 describing Japanese Application No. 55-29956 (Yokomine) that is concerned with the incorporation of a heat radiative lamp inside a lamination roller.

### Summary of Invention

The present invention provides a method for producing an embossed identification plate, such as a license plate, wherein desired indicia are embossed in the front surface in relief form and retroreflective sheeting is adhered to the background portions of the front surface.

The invention is as defined in the accompanying claims, Claim 1 of which has been divided into a two part form based on the assumption that European Patent Application Publication No. 0 043 2194 is the nearest state of the art.

Briefly summarizing, the novel method of the invention comprises, first, tacking a piece of reflective, preferably retroreflective, sheeting which has a layer of low-tack, heat-activated adhesive on the back side thereof to the front surface of a plate blank. The plate blank may have a thin, reinforcing rim along one or more of its sides for improved rigidity, but is essentially planar in the interior regions of its front surface. The reflective sheeting is typically trimmed to fit inside the boundaries of the reinforcing rim, preferably covering substantially all of the interior region of the plate. The tack provided is sufficient to secure the sheeting to the plate throughout the subsequent fabrication steps but is low enough to permit removal of cut-out portions of the sheeting as described below.

Second, embossing the plate blank and reflective sheeting according to the outline of the desired indicia with a dual-die press, wherein a male die is pressed to the back surface of the plate blank, and a female die is pressed to the front surface of the plate blank upon which the sheeting is tacked. The female die is adapted to shear the sheeting according to the contours of the relief image of the indicia, thereby cutting-out the portions of the sheeting which cover the relief image.

Third, removing the cut-out portions of the reflective sheeting which cover the relief image and which are only lightly tacked thereto.

Fourth, moving the embossed plate and trimmed sheeting which is tacked thereto through a series of at least two pairs of co-acting, resilient lamination rollers. By co-acting it is meant that the rollers of each pair are simultaneously in contact with the plate on opposing sides thereof. The roller of each pair which contacts the front surface of the plate, or more accurately, the reflective sheeting which is tacked thereto, comprises heating means. As the plate and tacked sheeting are moved between the rollers, the heated roller conforms to the contour of the indicia and heats the sheeting, which generally is at a level lower than the raised indicia, and adhesive on the backside of the sheeting, thereby causing the adhesive to effectively wet the surface of the plate and activating it as the sheeting is simultaneously laminated to the plate. Preferably a series of such co-acting roller pairs are provided and arranged so as to firmly support the plate during fabrication and to achieve a gradual, controllable rate of heating, thereby preventing even a thermoplastic plate from warping or distorting. Preferably, each roller has a substantially similar hardness as its co-acting roller, i.e., a Shore A hardness within ±20 durometer of the hardness of its co-acting roller.

According to the novel method of the invention, embossed identification plates having desired indicia embossed on the front surface thereof with reflective sheeting adhered to the background portions of the front surface may be conveniently and accurately made from plastic materials such as acrylonitrile-butadiene-styrene copolymers. Accurate application of reflective sheeting to the background portions of the front surface of the plate is achieved and no overcoating of the relief indicia is necessary to provide color or reflective contrast between the indicia and background. With the novel method, such plates may even be made from thermoplastic materials having heat distortion temperatures relatively near the activation temperature for the adhesives used.

### Brief Description of Drawing

In the accompanying drawing,
Figure 1 is a cross-sectional view of a typical plate blank with reflective sheeting tacked to the front surface thereof;
Figure 2 is a cross-sectional view of a typical plate blank being embossed and the reflective sheeting tacked thereto being cut out according to the present invention;
Figure 3 is a cross-sectional view of the plate blank shown in Figure 1 after the desired indicia have been embossed therein;
Figure 4 is a perspective view showing a plate and with trimmed reflective sheeting tacked thereto being passed between two pairs of co-acting, resilient lamination rollers;
Figure 5 is a cross-sectional view of a typical resilient lamination roller according to the invention; and
Figure 6 is a plan view showing the final appearance of a typical license plate manufactured according to the present invention.

These Figures are not to scale and are intended to be illustrative only.

### Detailed Description of Invention

Because of lighter weight and reduced cost relative to metal-based constructions, identification plates such as license plates are more commonly being made from such plastic materials as acrylonitrile-butadiene-styrene copolymers ("ABS").

Plate blanks, from which identification plates are typically fabricated are formed such as by an injection molding process. A typical blank is about (4.5 inches) 11.5 centimeters wide, (18.5 inches) 47.0 centimeters long and between about (80 and 100 mils) 2.0 and 2.5 millimeters thick. Generally the blank is formed with thicker edges or a ridge along all four sides, i.e., a reinforcing rim about (125 mils) 3.2 millimeters thick and (250 mils) 6.4 millimeters wide, to impart greater strength and rigidity to the plate.

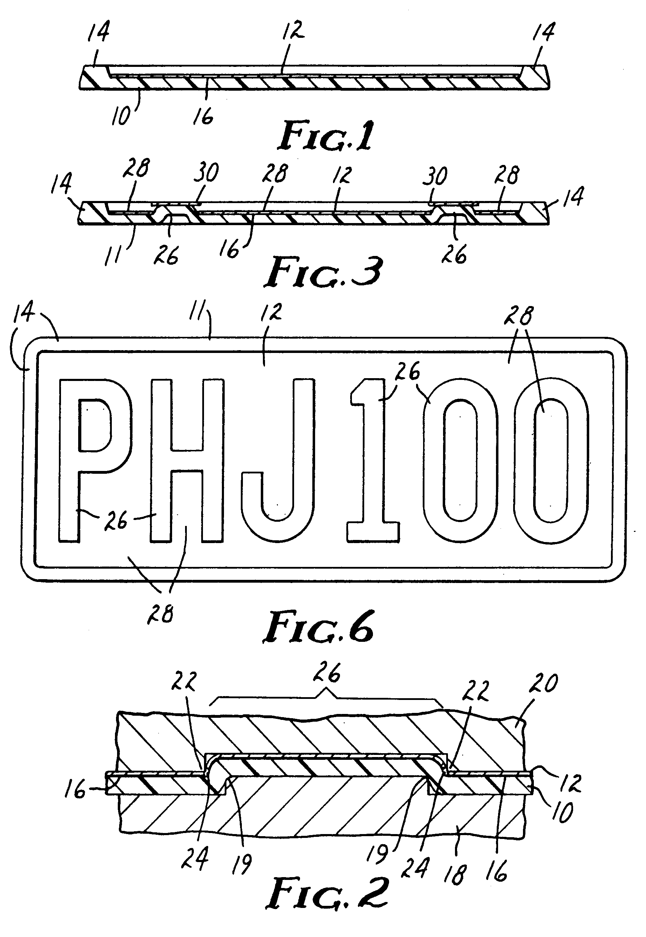

Figure 1 shows in cross-section a typical plate blank 10 having a reflective sheet 12 tacked within the interior portions of the front surface thereof as defined by reinforcing rims 14. The retroreflective sheeting 12 has a layer 16 of low-tack, heat-activated adhesive on the back side thereof.

When used to make identification plates, e.g., license plates, ABS, which is naturally hazy white in appearance, is typically pigmented with a desired color or black. Black pigments are preferred because they typically block polymer matrix-damaging ultraviolet radiation better than other pigments and typically tend to be more fade resistant than other pigments. Black also provides an effective color contrast between the indicia and the typically white or light-colored reflective background.

For identification plates such as license plates, the reflective sheeting 12 is typically preferably retroreflective to provide greater visibility. Such sheeting should have suitable durability and aging characteristics for the environment in which the identification plate is to be used. Suitable reflective sheetings 12 should be flexible enough that they do not crack during embossing or when the plate is flexed during use. However, sheetings used herein should not have such a high tensile elongation that they are stretched rather than cut during the embossing process as described below. We have found that sheetings having tensile elongations between about 5 and 35 percent are useful in this invention, with those having tensile elongations between about 10 and 25 percent being preferred. Examples thereof include acrylic-, urethane-, and polyester-based sheetings. Sheetings having high vinyl content may tend to stretch too much and to wrap around the relief-form indicia rather than to be cut during embossing, whereas sheetings having high alkyd content may tend to be too brittle and to crack during embossing.

Suitable adhesives include those which provide a desired degree of tack, as hereinafter described, at room temperature conditions, i.e., between about (60°F) 15°C and (80°F) 27°C , and which can be activated, typically with heat, to provide a firm bond of the reflective sheeting to the embossed plate which will withstand conditions encountered in the environment in which the identification plate is to be used. For applications such as vehicle license plates, the adhesive bond which is provided should preferably withstand delamination forces due to wind, rain, etc., resist impact failure, maintain a firm bond throughout a temperature range of (-40°F) -40°C to at least about (150°F) 65°C, and meet the criteria set forth in International Standards Organization specification 7591 for vehicle identification sheeting. In order to withstand the temperatures encountered in, e.g., a parking lot, the adhesive on a license plate made according to the invention should have a heat-activation temperature of at least(150°F) 65°C , and preferably at least(160°F) 70°C . Examples of suitable adhesives include acrylic-based compounds, such as the heat-activated adhesive comprising a pressure-sensitive-adhesive acrylate polymer and a tackifying resin which is disclosed in U.S. Patent No. 4,248,748 (McGrath et al.).

Desired room temperature tack is typically provided by adhesives which have "rolling tack" between about 2 and 20, preferably between about 5 and 10, centimeters as described herein. Rolling tack is determined by rolling a (0.25 inch) 6.4 millimeter steel ball down a (2.5 inch) 6.4 centimeter high ramp tilted to a 30° incline onto a level surface coated with the adhesive. The distance which the ball rolls along the adhesive coated surface is measured to provide the adhesive's rolling tack. The test is performed at room temperature, i.e., at (72°F) 22°C . A similar method is taught in Pressure-Sensitive Tape Council Test Method PSTC-6, issued October, 1964, revised November, 1970. Sheetings having substantially less tacky adhesives may tend to slide around on the plate before the desired indicia have been embossed into the plate, or after embossing but before the sheeting is laminated thereto and the adhesive is heat-activated. Such sliding may interfere with proper alignment of, e.g., the trimmed sheeting and indicia. The cut-out portions of sheetings having substantially higher tack adhesives will tend to be harder to remove from the indicia. Any portions of the sheeting which overlap the indicia, e.g., trimmed sheeting which has slid from its initially tacked position or cut-out portions which have not been completely removed, may tend to interfere with the legibility thereof.

An identification plate is made by first tacking a piece of retroreflective sheeting 12 with the low-tack, heat-activated adhesive 16 on its back side to the front surface of a plate blank 10 with light pressure, e.g., with a rubber doctor blade or squeegee to provide the construction shown in Figure 1. It will generally be convenient to trim the sheeting 12 to fit within the reinforcing rim 14 of the blank 10, if one is provided, before tacking it to the blank.

The plate blank 10 is then embossed with a dual-die embossing press to emboss the desired indicia 26, e.g., alphanumeric characters, and cut the retroreflective sheeting 12 as shown in Figure 2. A male die 18 in the form of the desired indicia 26 is pressed into the back side of the blank 10 as a female die 20 shaped to cooperate with the male die is pressed to the front surface of the blank upon which the reflective sheeting 12 is tacked. The upper edges 19 of the male die 18 are typically rounded. The female die is adapted with cutting edges 22 to cut-out 24 the sheeting along the relief outline of the indicia 26.

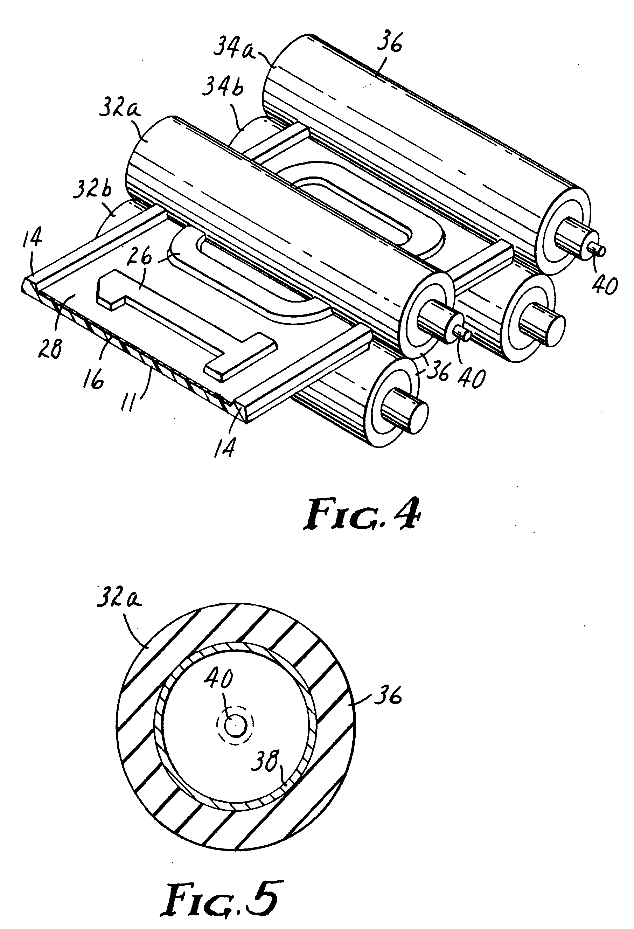

Figure 3 shows a cross-section of the embossed plate 11 and reflective sheeting 12. The background portions of the front surface of the plate are covered with trimmed sheeting 28 tacked thereto. The indicia 26 have cut-out portions 30 of the sheeting still tacked thereto.

The cut-out portions 30 of the sheeting are then removed to expose the underlying relief pattern of the indicia 26. The cut-out portions 30 are removed such as with a transfer tape (not shown) or by contacting the sheeting with some adhesive or suction means (not shown) which more strongly adheres to the sheeting 30 than does the low-tack adhesive 16 to the identification plate 11. Because the cut-out portions 30 are on the indicia 26 which is raised in relief, they are easily selectively contacted and removed without disturbing the trimmed portions 28 of the sheeting which are tacked to the now relatively recessed background portions of the front surface of the plate 11. Daytime visibility of the identifying indicia 26 is provided by selecting a sheeting 12 the color of which contrasts well with the pigmented color of the license plate 11, e.g., a white sheeting and black plate. Nighttime visiblity is provided by the contrasting reflectivity between the background and indicia. If desired, the indicia 26 may subsequently be coated, i.e., painted with a desired contrast color.

The embossed plate 11 with the trimmed retroreflective sheeting 28 tacked thereto is then passed through a series of pairs of co-acting, resilient lamination rollers 32a,b, 34a,b, as shown in Figure 4. The rollers are co-acting in that both rollers of a pair are aligned on an axis transverse to the path of movement of the plate so as to simultaneously contact opposite sides of the plate. While co-acting rollers need not have equal diameters, they should have equal surface speeds to avoid scuffing the plate and reflective sheeting or disturbing the position of the sheeting. This may be accomplished by, e.g., driving only the top roller of each co-acting pair and driving all such rollers at equal surface speeds.

The lamination rollers 32a,b, 34a,b are resilient material, typically having a Shore A hardness of about 30 to 60 durometer, preferably between about 40 and 50 durometer. Each roller should be within 20 durometer of its co-acting roller. If the difference in hardness between two co-acting rollers is too great, the thermoplastic plate may tend to curl around the harder roller. Preferably the rollers will be within 10 durometer of each other, and ideally they will be within 5 durometer. Higher operating temperatures closer to the heat deformation point of the plate make it more important for any difference in hardness between co-acting lamination rollers to be small.

The roller of each pair 32a, 34a which contacts the front surface of the embossed plate 11 and reflective sheeting 28 which is tacked thereto is heated. Figure 5 shows a typical cross-section of such rollers. The outer surface of the roller is a cylindrically shaped layer 36 of resilient material having suitable hardness as discussed above. The resilient material is supported by a rigid member 38, such as an aluminum or steel cylinder. The roller further comprises heating means 40, such as a resistance heating element or infrared lamp at the center of the roller or a heating web or blanket laminated to the rigid member 38. Such heating means 40 preferably heats layer 36 uniformly around its circumference.

A series of pairs of co-acting rollers provide the heat necessary to activate the adhesive as the trimmed sheeting is laminated to the plate by the resilient rollers which conform around the relief pattern of the indicia and provide sufficient pressure to cause the adhesive to effectively wet the surface of the plate 11. The heated rollers 32a, 34a are preferably heated to a uniform temperature across the full portion of their length which is in contact with the plate 11 to avoid warping it.

ABS has a heat-distortion temperature of about(200°F) 95°C , i.e., at temperatures of (190°F) 90°C or more the plate blank is easily distorted and may tend to warp. Suitable adhesives will have a heat-activation temperature which is preferably at least (160°F) 70°C , and more typically is between about (165°F) 80°C and (190°F) 90°C . Therefore care must be taken to fully support the plate as it is passed through the lamination rollers.

The number of pairs of co-acting rollers is determined in part by the length of the identification plate being made, with a greater number of co-acting rollers typically being necessary when longer identification plates are being made. At least two such pairs are required with up to twelve or more being useful. Enough pairs should be provided to support the plate and prevent it from warping as the sheeting is laminated thereto and the adhesive is activated. Typically, a sufficient number of rollers should be used to provide a residence time of about 20 to 40 seconds at the proper activation temperature, however, this will depend upon the adhesive used. The roller pairs may be spaced no further apart than the length of the plate, but closer spacing is generally preferred to ensure sufficient support to prevent warping or distortion of the plate and to minimize heat loss.

Figure 6 is a plan view showing the final appearance of a typical vehicle license plate manufactured according to the present invention.

The present invention will be further explained in the following nonlimiting example.

### Example

Black-pigmented ABS was injection molded to form plate blanks about (4.5 inches) 11.5 centimeters wide, (18.5 inches) 47.0 centimeters long, and between (80 and 100 mils) 2.0 and 2.5 millimeters thick. The blanks had a reinforcing rim about (125 mils) 3.2 millimeters thick and (250 mils) 6.4 millimeters wide on all four sides surrounding an essentially planar interior.

An acrylic/urethane-based sheeting having a tensile elongation between about 15 and 25 percent was cut into strips of proper dimension to fit within the reinforcing rim covering essentially the entire planar interior. The sheeting had a tensile strength of about (12.5 pounds per inch width) 21.9 Newtons per centimeter width , and was coated on the back side with a low-tack, heat-activated adhesive comprising an acrylate polymer and a phenolic tackifying resin such as is disclosed in U.S. Patent No. 4,248,748. The adhesive had a rolling tack, as defined herein, of between about 5 and 10 centimeters. The sheet was tacked to plate blank with the pressure applied by a rubber-bladed squeegee. All materials were at room temperature, i.e., between about (66°F) 19°C and(72°F) 22°C . The plate blank and sheeting were then embossed in a dual-die embossing station to form the desired indicia and cut out the reflective sheeting covering the indicia.

After embossing, the cut-out portions of the reflective sheeting were removed by means of an aggressively sticky tape which was lowered into contact with the cut-out portions of the sheeting then snapped back, thereby removing the same. The underlying blank ABS of the indicia was exposed while the trimmed reflective sheeting in the background areas remained firmly tacked thereto. Visual inspection revealed that the cut-out portions of the sheeting were completely removed as desired.

The plate and trimmed reflective sheeting were passed through four pairs of co-acting lamination rollers at a linear speed of about (2.5 feet) 0.76 meter per minute. The rollers each had a Shore A hardness of between about 35 and 45 durometer and a diameter of about (3.5 inches) 8.9 centimeters . The vertical gap between co-acting rollers was about 2 to 3 millimeters, and pairs of co-acting rollers were spaced about (1 inch) 2.5 centimeters apart. The top rollers in each co-acting pair were driven at equal speeds and comprised internal heating elements to yield a surface temperature of between about (180°F) 80°C and (200°F) 95°C . Temperature probes inserted into the adhesive layer revealed that, during lamination, the adhesive layer was heated to between about (160°F) 70°C and (180°F) 80°C.

After lamination the plates were allowed to cool to room temperature. Visual inspection revealed that the reflective sheeting had been trimmed, and was securely bonded, accurately according to the outline of the indicia, indicating that it had remained firmly tacked to the ABS plate as desired. No portions of the cut-out sheeting which had originally covered the indicia remained. The strength of the bond of the trimmed sheeting to the ABS plate was examined by directing a high pressure stream of hot water (175°F) 80°C at the laminate at pressures up to (2000 pounds per square inch) 1.48 x 10⁷ Newtons per square meter , eventually causing the sheeting to begin to break up and erode. No apparent failure of the adhesive bond to the ABS plate was evident.

## Claims

1. A method for producing an identification plate having desired idicia (26) embossed on the front surface thereof in relief fashion and having a reflective sheeting (12) adhered to the background portions of said front surface, said method comprising:
(A) tacking a reflective sheeting (12) comprising a low tack, heat-activated adhesive on the back side thereof to the front surface of a plate blank (10), the surface of said plate blank being essentially planar in the interior regions thereof;
(B) embossing said plate blank (10) and reflective sheeting (12) according to said indicia with a dual-die press, wherein a male die (18) is pressed to the back surface of said blank, and a female die (20) is pressed to the front surface of said blank upon which said reflective sheeting is tacked, said female die being adapted to shear said reflective sheating along the contours of said idicia, whereby said reflective sheeting is cut out along the relief outline of said indicia (26); and
(C) removing the cut-out portions (30) of said reflective sheeting from said indicia (26);
**characterized in that**
said plate blank (10) is theremoplastic and in that said method comprises;
(D) moving said embossed plate and the trimmed reflective sheeting which is tacked thereto through a series of at least two pairs of co-acting, resilient lamination rollers (32a, 32b, 34a, 34b), wherein the roller (32a, 34a) of each pair which contacts the front surface of said plate comprises heating means (40) and conforms to the contour of said indicia (26), whereby said adhesive is activated and effectively wets the surface of said plate (10) and said reflective sheeting is adhesively bonded to the front surface of said plate.

2. The method of claim 1 further characterized in that for said reflective sheeting (12) a retroreflective sheeting is used.

3. The method of claim 1 further characterized by forming said plate blank (10) with a reinforcing rim (14).

4. The method of claim 1 further characterized by selecting as said adhesive (16) an acrylic polymeric component that provides pressure-sensitive adhesive properties, and a tackifying resin component which reduces room temperature pressure-sensitive adhesiveness but leaves the adhesive with heat-activatable adhesive properties.

5. The method of claim 1 further characterized by selecting as said adhesive one that has a rolling tack of between about 2 and 20 centimeters.

6. The method of claim 1 further characterized by selecting as said adhesive one that has a rolling tack of between about 5 and 10 centimeters.

7. The method of claim 1 further characterized in that said cut-out portions (30) of said reflective sheeting (12) are removed with adhesive means, wherein the adherence of said adhesive means to said cut-out portions (30) exceeds the tack to said plate (10) provided by said low-tack, heat-activated adhesive on said reflective sheeting; or, said cut-out portions of said reflective sheeting are removed with suction means.

8. The method of claim 1 further characterized by providing from three to twelve pairs of said co-acting lamination rollers (32a, 32b, 34a, 34b).

9. The method of claim 1 further characterized by selecting as said lamination rollers ones that have a Shore A hardness of between about 30 and 60 durometer.

10. The method of claim 1 further characterized by selecting as said lamination rollers ones that have a Shore A hardness of between about 40 and 50 durometer.

11. The method of claim 1 further characterized by selecting the hardness of each said roller to be within 20 durometer of its co-acting roller.

12. The method of claim 1 further characterized by selecting the hardness of each said roller to be within 10 durometer of its co-acting roller.

13. The method of claim 1 further characterized by selecting the hardness of each said roller to be within 5 durometer of its co-acting roller.

14. The method of claim 1 further characterized by using, as said lamination rollers, rollers that each comprise:
(1) a rigid member (38) having an essentially cylindrical outer profile; and
(2) a resilient material (36) on the outer surface thereof, said resilient material having an essentially uniform thickness and conforming to the outer profile of said rigid member (38), said resilient material (36) being at least as thick as the depth of said indicia (26).

15. The method of claim 14 further characterized by using, as said plate blank (10), a plate blank comprising a reinforcing rim and making said resilient material (36) at least as thick as said reinforcing rim (14).

16. The method of claim 1 further characterized by using as said heating means at least one of the following: infrared lamps or resistance heating elements.

17. The method of claim 1 further characterized in that said adhesive (16) is heated to between about 65°C and 95°C.

18. The method of claim 1 further characterized by :
(1) using retroreflective sheeting as said reflective sheeting (12);
(2) forming said plate blank (10) with a reinforcing rim (14);
(3) using as said adhesive (16) an acrylic polymeric component that provides pressure-sensitive adhesive properties, and a tackifying resin component which reduces room temperature pressure-sensitive adhesiveness but leaves the adhesive with heat-activatable adhesive properties, said adhesive having a rolling tack of between about 2 and 20 centimeters;
(4) removing said cut-out portions (30) of said reflective sheeting (12) with adhesive means;
(5) providing from three to twelve pairs of said co-acting rollers, and choosing as said rollers ones that each comprise :
(a) a rigid member (38) having an essentially cylindrical outer profile; and
(b) a resilient material (36) on the outer surface thereof, said resilient material having an essentially uniform thickness and conforming to the outer profile of said rigid member, and being at least as thick as the depth of said indicia (26), wherein the hardness of said resilient material (36) is between about 30 and 60 durometer and is within 10 durometer of the resilient material on the co-acting roller; and
(6) heating said adhesive (16) to between about 65°C and 95°C.

## Patentansprüche

1. Verfahren zum Herstellen eines Kennzeichnungsschildchens, das auf seiner Vorderfläche mit erhaben geprägten gewünschten Zeichen (26) versehen ist und in dem an den Hintergrundteilen dieser Vorderfläche ein reflexionsfähiges Blattmaterial (12) klebt, in welchem Verfahren
(A) mit der Vorderfläche eines Schildrohlings (10) ein reflexionsfähiges Blattmaterial (12) verklebt wird, das auf seiner Rückseite mit einem nur schwach klebfähigen wärmeaktivierten Klebstoff versehen ist, wobei die Oberfläche des Schildrohlings in ihren inneren Bereichen im wesentlichen eben ist;
(B) der Schildrohling (10) und das reflexionsfähige Blattmaterial (12) entsprechend den genannten Zeichen mit einer Doppelwerkzeugpresse geprägt werden, in der ein Positivwerkzeug (18) gegen die Vorderfläche des Rohlings gepreßt wird, auf der das reflexionsfähige Blattmaterial klebt, während das Negativwerkzeug (20) geeignet ist, das reflexionsfähige Blattmaterial längs der Umrisse der der Zeichen durchzuscheren und dadurch das reflexionsfähige Blattmaterial längs des der Umrisse der erhabenen Zeichen (26) auszuschneiden; und
(C) die ausgeschnittenen Teile (30) des reflexionsfähigen Blattmaterials von den Zeichen (26) entfernt werden,
dadurch gekennzeichnet, daß
der Schildrohling (10) thermoplastisch ist und in dem Verfahren
(D) das geprägte Schildchen und das daran klebende, zugeschnittene reflexionsfähige Blattmaterial durch eine Reihe von mindestens zwei Paaren von miteinander zusammenwirkenden elastischen Kaschierrollen (32a, 32b, 34a, 34b) bewegt werden, in denen die die Vorderfläche des Schildchens berührende Walze (32a, 34a) jedes Paares eine Heizeinrichtung (40) aufweist und dem Umriß der Zeichen (26) angepaßt ist, so daß der Klebstoff aktiviert wird und die Oberfläche des Schildchens (10) effektiv benetzt und das reflexionsfähige Blattmaterial mit der Vorderfläche des Schildchens verklebt wird.

2. Verfahren nach Anspruch 1, dadurch gekennzeichnet, daß als das reflexionsfähige Blattmaterial (12) ein rückstrahlfähiges Blattmaterial verwendet wird.

3. Verfahren nach Anspruch 1, dadurch gekennzeichnet, daß der Schildrohling (10) mit einem Verstärkungsrand (14) ausgebildet wird.

4. Verfahren nach Anspruch 1, dadurch gekennzeichnet, daß als der genannte Klebstoff (16) eine Acrylpolymerkomponente gewählt wird, die dem Klebstoff Haftklebereigenschaften verleiht, und eine klebfähigmachende Harzkomponente, die die Haftklebefähigkeit bei Zimmertemperatur herabsetzt, aber bewirkt, daß der Klebstoff zur Klebfähigkeit wärmeaktivierbar bleibt.

5. Verfahren nach Anspruch 1, dadurch gekennzeichnet, daß als der genannte Klebstoff ein Klebstoff ausgewählt wird, der eine Wälzklebfähigkeit zwischen etwa 2 und 20 cm besitzt.

6. Verfahren nach Anspruch 1, dadurch gekennzeichnet, daß als der genannte Klebstoff ein Klebstoff ausgewählt wird, der eine Wälzklebfähigkeit zwischen etwa 5 und 10 cm besitzt.

7. Verfahren nach Anspruch 1, dadurch gekennzeichnet, daß die ausgeschnittenen Teile (30) des reflexionsfähigen Blattmaterials (12) mit klebfähigen Mitteln entfernt werden, die deren Adhäsionsfestigkeit an den ausgeschnittenen Teilen (30) größer ist als die Adhäsionsfestigkeit des nur schwach klebfähigen wärmeaktivierbaren Klebstoffes auf dem reflexionsfähigen Blattmaterial an dem Schildchen (10) oder daß die ausgeschnittenen Teile des reflexionsfähigen Blattmaterials mit einer Saugeinrichtung entfernt werden.

8. Verfahren nach Anspruch 1, dadurch gekennzeichnet, daß drei bis zwölf Paare der miteinander zusammenwirkenden Kaschierwalzen (32a, 32b, 34a, 34b) verwendet werden.

9. Verfahren nach Anspruch 1, dadurch gekennzeichnet, daß als die genannten Kaschierwalzen Walzen mit einer Shore A-Härte von etwa 30 bis 60 gewählt werden.

10. Verfahren nach Anspruch 1, dadurch gekennzeichnet, daß als die genannten Kaschierwalzen Walzen mit einer Shore-A-Härte von etwa 40 bis 50 gewählt werden.

11. Verfahren nach Anspruch 1, dadurch gekennzeichnet, daß die Shore A-Härte jeder der genannten Walzen von der Shore A-Härte der mit ihr zusammenwirkenden Walze um nicht mehr als 20 abweicht.

12. Verfahren nach Anspruch 1, dadurch gekennzeichnet, daß die Shore A-Härte jeder der genannten Walzen von der Shore A-Härte der mit ihr zusammenwirkenden Walze um nicht mehr als 10 abweicht.

13. Verfahren nach Anspruch 1, dadurch gekennzeichnet, daß die Shore A-Härte jeder der genannten Walzen von der Shore A-Härte der mit ihr zusammenwirkenden Walze um nicht mehr als 5 abweicht.

14. Verfahren nach Anspruch 1, dadurch gekennzeichnet, daß als die genannten Kaschierwalzen Walzen verwendet werden, von denen jede
(1) ein starres Glied (38) mit einem im wesentlichen zylindrischen Außenprofil und
(2) einen auf der Außenfläche der Walze vorgesehenen elastischen Werkstoff (36) aufweist, der eine im wesentlichen einheitliche Dicke besitzt und dem Außenprofil des starren Gliedes (38) angepaßt ist und dessen Dicke mindestens so groß ist wie die Tiefe der Zeichen (26).

15. Verfahren nach Anspruch 14, dadurch gekennzeichnet, daß als der genannte Schildrohling (10) ein Schildrohling mit einem Verstärkungsrand verwendet wird und daß für den elastischen Werkstoff (36) eine Dicke gewählt wird, die mindestens so groß ist wie die Dicke des Verstärkungsrandes (14).

16. Verfahren nach Anspruch 1, dadurch gekennzeichnet, daß als die genannte Heizeinrichtung mindestens eine der nachstehenden verwendet wird: Infrarotlampen oder Widerstandsheizelemente.

17. Verfahren nach Anspruch 1, dadurch gekennzeichnet, daß der genannte Klebstoff (16) auf eine Temperatur zwischen 65 und 95°C erhitzt wird.

18. Verfahren nach Anspruch 1, dadurch gekennzeichnet, daß
(1) als das genannte reflexionsfähige Blattmaterial (12) ein rückstrahlfähiges Blattmaterial verwendet wird;
(2) der genannte Schildrohling (10) mit einem Verstärkungsrand (14) ausgebildet wird;
(3) als der genannte Klebstoff (16) eine Acrylpolymerkomponente verwendet wird, die dem Klebstoff Haftklebereigenschaften verleiht, und eine klebfähigmachende Harzkomponente, die die Haftklebefähigkeit bei Zimmertemperatur herabsetzt, aber bewirkt, daß der Klebstoff zur Klebfähigkeit wärmeaktivierbar bleibt, wobei der Klebstoff eine Wälzklebfähigkeit zwischen etwa 2 und 20 cm besitzt;
(4) die ausgeschnittenen Teile (30) des reflexionsfähigen Blattmaterials (12) mit klebfähigen Mitteln entfernt werden;
(5) drei bis zwölf Paare der genannten miteinander zusammenwirkenden Walzen verwendet werden, und als die genannten Walzen Walzen verwendet werden, von denen jede
(a) ein starres Glied (38) mit einem im wesentlichen zylindrischen Außenprofil und
(b) einen auf der Außenfläche der Walze vorgesehenen elastischen Werkstoff (36) aufweist, der eine im wesentlichen einheitliche Dicke besitzt und dem Außenprofil des starren Gliedes (38) angepaßt ist und dessen Dicke mindestens so groß ist wie die Tiefe der Zeichen (26) und dessen Shore A-Härte etwa 30 und bis 60 beträgt und sich von der Shore A-Härte des elastischen Werkstoffs auf der damit mit der Walze zusammenwirkenden Walze um nicht mehr als 10 unterscheidet, und
(6) der genannte Klebstoff (16) auf etwa 65 bis 95°C erhitzt wird.

## Revendications

1. Procédé de fabrication d'une plaque d'immatriculation sur la surface avant de laquelle est emboutie l'inscription (26) souhaitée en relief et présentant un revêtement réfléchissant (12) adhérant aux parties de derrière de ladite surface avant, ledit procédé comprenant les étapes consistant à :
(A) coller un revêtement réfléchissant (12) comprenant un adhésif de faible adhérence thermo-activable sur sa face arrière à la surface avant d'un flan de plaque (10), la surface dudit flan de plaque étant sensiblement plane dans ses zones intérieures ;
(B) emboutir ledit flan de plaque (10) et ledit revêtement réfléchissant (12) conformément à ladite inscription avec une presse à deux matrices, où une matrice mâle (18) est pressée contre la surface arrière dudit flan, et une matrice femelle (20) est pressée contre la surface avant dudit flan sur lequel est collé ledit revêtement réfléchissant, ladite matrice femelle étant conçue pour cisailler ledit revêtement réfléchissant le long des contours de ladite inscription, moyennant quoi ledit revêtement réfléchissant est découpé le long du profil en relief de ladite inscription (26) ; et
(C) enlever de ladite inscription les parties découpées (30) dudit revêtement réfléchissant ;
caractérisé en ce que
ledit flan de plaque (10) est thermoplastique, et en ce que ledit procédé comprend l'étape consistant à
(D) faire passer ladite plaque emboutie et le revêtement réfléchissant découpé qui est collé dessus à travers une série d'au moins deux paires de rouleaux de contrecollage (32a, 32b, 34a, 34b) élastiques qui coopèrent, le rouleau (32a, 34a) de chaque paire qui est en contact avec la surface avant de ladite plaque comprenant des moyens de chauffage (40) et épousant le profil de ladite inscription (36), moyennant quoi ledit adhésif est activé et mouille efficacement la surface de ladite plaque (10) et ledit revêtement réfléchissant est lié de façon adhésive à la surface avant de ladite plaque.

2. Procédé selon la revendication 1, caractérisé en outre en ce qu'un revêtement rétroréfléchissant est utilisé pour ledit revêtement réfléchissant (12).

3. Procédé selon la revendication 1, caractérisé en outre en ce que ledit flan de plaque (10) est muni d'un rebord de renforcement (14).

4. Procédé selon la revendication 1, caractérisé en outre en ce qu'on choisit pour ledit adhésif (16) un composant polymère acrylique qui confère des propriétés d'adhésif sensible à la pression, et un composant de résine tackifiante qui diminue l'adhérence sensible à la pression à température ambiante mais confère à l'adhésif des propriétés d'adhésif thermo-activable.

5. Procédé selon la revendication 1, caractérisé en outre en ce qu'on choisit pour ledit adhésif un adhésif qui présente une adhérence de roulage comprise environ entre 2 et 20 centimètres.

6. Procédé selon la revendication 1, caractérisé en outre en ce qu'on choisit pour ledit adhésif un adhésif qui présente une adhérence de roulage comprise environ entre 5 et 10 centimètres.

7. Procédé selon la revendication 1, caractérisé en outre en ce que lesdites parties découpées (30) dudit revêtement réfléchissant (12) sont enlevées avec des moyens adhésifs, l'adhérence desdits moyens adhésifs auxdites parties découpées (30) dépassant l'adhérence à ladite plaque (10) conférée par ledit adhésif de faible adhérence thermo-activé sur ledit revêtement réfléchissant ; ou bien, lesdites parties découpées dudit revêtement réfléchissant sont enlevées avec des moyens d'aspiration.

8. Procédé selon la revendication 1, caractérisé en outre en ce qu'on prévoit trois à douze paires desdits rouleaux de contrecollage (32a, 32b, 34a, 34b) qui coopèrent.

9. Procédé selon la revendication 1, caractérisé en outre en ce qu'on choisit pour lesdits rouleaux de contrecollage des rouleaux qui ont une dureté Shore A comprise environ entre 30 et 60 duromètre.

10. Procédé selon la revendication 1, caractérisé en outre en ce qu'on choisit pour lesdits rouleaux de contrecollage des rouleaux qui ont une dureté Shore A comprise environ entre 40 et 50 duromètre.

11. Procédé selon la revendication 1, caractérisé en outre en ce qu'on choisit la dureté de chacun desdits rouleaux de façon qu'elle diffère d'au plus 20 duromètre de celle du rouleau qui coopère avec lui.

12. Procédé selon la revendication 1, caractérisé en outre en ce qu'on choisit la dureté de chacun desdits rouleaux de façon qu'elle diffère d'au plus 10 duromètre de celle du rouleau qui coopère avec lui.

13. Procédé selon la revendication 1, caractérisé en outre en ce qu'on choisit la dureté de chacun desdits rouleaux de façon qu'elle diffère d'au plus 5 duromètre de celle du rouleau qui coopère avec lui.

14. Procédé selon la revendication 1, caractérisé en outre en ce qu'on utilise pour lesdits rouleaux de contrecollage des rouleaux comprenant chacun :
(1) un élément rigide (38) ayant un profil extérieur globalement cylindrique ; et
(2) un matériau élastique (36) sur sa surface extérieure, ledit matériau élastique ayant une épaisseur globalement uniforme et épousant le profil extérieur dudit élément rigide (38), ledit matériau élastique (36) étant au moins aussi épais que la profondeur de ladite inscription (26).

15. Procédé selon la revendication 14, caractérisé en outre en ce qu'on utilise pour ledit flan de plaque (10) un flan de plaque comprenant un bord de renforcement et on réalise ledit matériau élastique (36) de façon qu'il soit au moins aussi épais que ledit bord de renforcement (14).

16. Procédé selon la revendication 1, caractérisé en outre en ce qu'on utilise pour lesdits moyens de chauffage au moins l'un des suivants : lampes infrarouges ou éléments de chauffage à résistance.

17. Procédé selon la revendication 1, caractérisé en outre en ce que ledit adhésif (16) est chauffé à une température comprise environ entre 65°C et 95°C.

18. Procédé selon la revendication 1, caractérisé en outre en ce que :
(1) on utilise un revêtement rétroréfléchissant pour ledit revêtement réfléchissant (12) ;
(2) on munit ledit flan de plaque (10) d'un bord de renforcement (14) ;
(3) on utilise pour ledit adhésif (16) un composant polymère acrylique qui confère des propriétés d'adhésif sensible à la pression, et un composant de résine tackifiante qui diminue l'adhérence sensible à la pression à température ambiante mais confère à l'adhésif des propriétés d'adhésif thermo-activable, ledit adhésif ayant une adhérence de roulage comprise environ entre 2 et 20 centimètres ;
(4) on enlève lesdites parties découpées (30) dudit revêtement réfléchissant (12) avec des moyens adhésifs ;
(5) on prévoit trois à douze paires desdits rouleaux qui coopèrent, et on choisit pour lesdits rouleaux des rouleaux qui comprennent chacun :
(a) un élément rigide (38) ayant un profil extérieur globalement cylindrique ; et
(b) un matériau élastique (36) sur sa surface extérieure, ledit matériau élastique ayant une épaisseur globalement uniforme et épousant le profil extérieur dudit élément rigide et étant au moins aussi épais que la profondeur de ladite inscription (26), la dureté dudit matériau élastique (36) étant comprise environ entre 30 et 60 duromètre et différant d'au plus 10 duromètre du matériau élastique sur le rouleau qui coopère ; et
(6) on chauffe ledit adhésif (16) à une température comprise environ entre 65°C et 95°C.
